# NEUE EUROPÄISCHE PATENTSCHRIFT

(11) **EP 0 449 270 B2**
(45) Veröffentlichungstag und Bekanntmachung des Hinweises auf die Entscheidung über den Einspruch: **11.11.1998**
(45) Hinweis auf die Patenterteilung: 07.09.1994
(21) Anmeldenummer: 91104913.8
(22) Anmeldetag: 27.03.1991
(51) Int. Cl.: G01F 1/24

(54) **Vorrichtung zur Messung des Stroms eines fliessfähigen Mediums**
Fluid flow measuring device
Dispositif de mesure du débit d'un fluide

(30) Priorität: 28.03.1990 DE 4009959
(43) Veröffentlichungstag der Anmeldung: 02.10.1991
(73) Patentinhaber: Fischer & Porter GmbH, D-37079 Göttingen (DE)
(72) Erfinder: Dettmer, Hans Jürgen, W-3400 Göttingen (DE); Herwig, Jörg, W-3500 Kassel (DE); Hagemann, Joachim, W-3400 Göttingen (DE); Marchewka, Werner, W-3433 Neu Eichenberg (DE); Ützfeld, Michael, W-3500 Kassel (DE)
(74) Vertreter: Liska, Horst, Dr.-Ing.

(56) Entgegenhaltungen:
- DE-A- 2 627 865
- DE-A- 3 027 763
- DE-A- 3 411 156
- GB-A- 2 195 768
- GB-A- 2 219 662
- US-A- 4 059 015
- US-A- 4 944 190
- Haak, Reinhard: "Zur Problematik und Realisierung der Schwebekörper-Durchflussmessung mit elektrischem Abgriff und mikroprozessorgestützter Volumenstromberechnung", Fortschrittsberichte, VDI Reihe 8, Nr. 136 Düsseldorf, VDI-Verlag, 1987
- Installation and Maintenance Instruction Series 9300-ET Metal Tube Transmitting Rotameter, Ketema Schutte and Koerting Division, 2233 State Road, Bensalem PA 19020, USA 15.07.89
- Metal Tube Electronic Alarm Rotameters, McCrometer, Hemet CA 92545-7799, USA, 1955

## Beschreibung

Die Erfindung betrifft eine Vorrichtung zur Messung des Stroms eines fließfähigen Mediums nach dem Oberbegriff des Anspruchs 1.

Eine Vorrichtung dieser Art ist in der Druckschrift: Haak, Reinhard "Zur Problematik und Realisierung der Schwebekörper-Durchflußmessung mit elektrischem Abgriff und mikroprozessorgestützter Volumenstromberechnung", Fortschrittsberichte, VDI Reihe 8 Nr. 136, Düsseldorf, VDI-Verlag, 1987, beschrieben, wobei insbesondere auf die Kapitel 2, 5.3, 5.4, 6 und 9 der genannten Druckschrift verwiesen wird.

Bei solchen Vorrichtungen ist die Vertikallage des Schwebekörpers im wesentlichen proportional zum Strom des fließfähigen Mediums, aber abhängig von Form und Abmessung des Rohrstücks und des Schwebekörpers, der Art des Mediums und den Betriebsbedingungen. Ein die Vertikallage des Schwebekörpers anzeigendes Signal ist daher meist nicht linear von der Vertikallage des Schwebekörpers abhängig. Bei der gattungsgemäßen Vorrichtung erfolgt die Linearisierung des digitalisierten Ausgangssignals des Hall-Sensors und die Kennlinienapproximation durch arithmetische Operationen unter Verwendung eines Mikroprozessors mit Implementierung eines digitalen Tiefpaßfilters und eines Kurven-Interpolators.

Ein Schwebekörper-Durchflußmesser mit einem außen am Rohrstück angeordneten Hall-Sensor zur Detektion der räumlichen Lage des mit einem Permanentmagneten verbundenen Schwebekörpers ist ferner aus der GB-2 195 768 A bekannt.

Zum Stand der Technik wird ferner auf die DE-3 411 156 A1 verwiesen, aus der ein Schwebekörper-Durchflußmesser mit einem senkrechten Meßkanal bekannt ist, dessen Querschnitt sich nach oben erweitert und in dem ein einen Magneten enthaltender Schwebekörper angeordnet ist. Außerhalb des Meßkanals befindet sich eine auf unterschiedliche Positionen des Magneten reagierende Sensorvorrichtung, die eine Reihe von längs des Meßkanals angeordneten Magnetfeldsensoren aufweist, die an einer Auswerteeinrichtung zur Erzeugung eines die Stellung des Magneten angebenden Positionssignals angeschlossen sind. Die Auswerteeinrichtung ist mit einem Festwertspeicher verbunden, der von den den einzelnen Magnetfeldsensoren zugeordneten Positionssignalen als Adressensignale angesteuert wird und der in jeder Adresse einen Durchflußwert für die jeweilige Position des Schwebekörpers gespeichert enthält. Die von dem Festwertspeicher ausgegebenen Durchflußwerte sind einer Rechenschaltung zuführbar, die aus ihnen die Durchflußmenge unter Berücksichtigung von variablen Parametern, wie Viskosität und Temperatur des strömenden Mediums, errechnet. Bei diesem Durchflußmesser ist eine Vielzahl von Magnetfeldsensoren vorzusehen, die sich in einer Reihe über eine beträchtliche Höhe des Meßkanals erstrecken, und eine Auswerteeinrichtung, die an jeden dieser Magnetfeldsensoren angeschlossen ist, um aus den Signalen der Magnetfeldsensoren jeweils ein Signal oder eine Signalkombination auszusuchen, die dem Durchflußwert entspricht. Dies ist wegen der Vielzahl erforderlicher Magnetfeldsensoren vorrichtungstechnisch und wegen der Aufgabe der Auswerteeinrichtung schaltungstechnisch sehr aufwendig.

Bei den mit einem Hall-Sensor zur Detektion der vertikalen Position des Schwebekörpers arbeitenden Schwebekörper-Durchflußmessern nach dem Stand der Technik ist der Hall-Sensor in unmittelbarer Nähe des Rohrstücks oder unmittelbar an dem Rohrstück angeordnet, um den Abstand zu dem Gebermagneten möglichst klein zu halten und entsprechend hohe Nutzspannungen des Hall-Sensors zu erhalten. Bei einer derartigen Anordnung des Hall-Sensors relativ zu dem Gebermagneten in dem Rohrstück ergeben sich jedoch Meßgenauigkeitsprobleme, wenn die Temperatur des fließfähigen Mediums in dem Rohr schwankt. Derartige Meßgenauigkeitsprobleme resultieren insbesondere aus der temperaturabhängigen Driftanfälligkeit des Permanentmagneten und aus der temperaturabhängigen Empfindlichkeit des Hall-Sensors. Zum Zwecke der Verringerung derartiger Temperatureinflüsse werden in der oben genannten Druckschrift von Haak, Reinhard diverse Kompensations- bzw. Thermostatisierungsmaßnahmen, insbesondere bezüglich des Hall-Sensors, vorgeschlagen.

Es sind auch bereits Schwebekörper-Durchflußmesser bekannt, bei denen der Magnet am Schwebekörper mit einem außerhalb des Rohrstücks drehbar gelagerten Folgermagneten dahingehend wechselwirkt, daß die Drehstellung des Folgermagneten von der Vertikalposition des Gebermagneten im Rohrstück abhängt. Die Drehbewegung des Folgermagneten wird dabei üblicherweise über einen Kurvenscheibenmechanismus auf einen Skalenzeiger übertragen, wobei der Kurvenscheibenmechanismus die Linearisierung besorgt, so daß der Skalenzeiger die Durchflußrate auf einer Durchflußskala mit linearer Einteilung anzeigen kann. Ein derartiger, hinsichtlich der vorliegenden Erfindung jedoch nicht gattungsgemäßer Schwebekörper-Durchflußmesser ist in der eingangs genannten Druckschrift von Haak, Reinhard unter Kapitel 2.2 beschrieben und in Bild 2.3 gezeigt. Dort findet sich auch der Hinweis, daß beispielsweise über einen Drehwinkelenkoder, der auf die Welle des Folgermagneten aufgesteckt wird, eine elektrische Meßwertübertragung vorgenommen werden kann.

In einer Installations- und Wartungsanleitung mit Druckvermerk 15. Juli 1989 zu einem Schwebekörperdurchflußmesser der Serie 9300-ET der Firma Ketema Schutte and Koerting Division, USA, findet sich ein Hinweis darauf, daß bei dem betreffenden Schwebekörperdurchflußmesser außerhalb des den Schwebekörper enthaltenden Rohstücks ein Folgermagnet in Form eines drehbar gelagerten Ringmagneten vorgesehen ist, dessen Drehstellung von der räumlichen Lage des Schwebekörpers abhängt. Zur Überwachung der Drehstellung des Ringmagneten ist ein Hall-Sensor vorgesehen, dessen Ausgangssignal als Durchflußmeßsignal bereitgestellt wird.

Aufgabe der Erfindung ist es, bei einer Vorrichtung der im Oberbegriff des Anspruchs 1 genannten Art einen die vorstehend genannten Probleme der Meßgenauigkeitsbeeinflussung einfacher beherrschbar machenden, alternativen Weg der Erfassung der Vertikallage des Schwebekörpers mit einem Hall-Sensor anzugeben.

Diese Aufgabe wird erfindungsgemäß durch die Kombination der Merkmale des Anspruchs 1 gelöst.

Da der erste Hall-Sensor bei der erfindungsgemäßen Lösung nach Anspruch 1 nicht direkt auf das Magnetfeld des Gebermagneten in dem Rohrstück, sondern auf das Feld des Folgermagneten in Abhängigkeit von dessen Drehstellung ansprechen soll, kann der erste Hall-Sensor in einem größeren Abstand mit ersichtlich einfacherer thermischer Abkupplung vom Rohrstück angeordnet sein. Wenngleich der Folgermagnet nahe am Rohrstück angeordnet sein sollte, so unterliegt er dennoch nicht etwaigen Temperaturschwankungen des fließfähigen Mediums in dem Maße, wie dies für den Gebermagneten der Fall ist. Der Auswerteschaltung wird auch das Ausgangssignal des am Folgermagneten vorgesehenen weiteren Hall-Sensors als Referenzsignal zur Berücksichtigung des Alterungszustandes bzw. von Änderungen der magnetischen Eigenschaften des Folgermagneten zugeführt.

Wenngleich der Gebermagnet ein Elektromagnet mit Gleichstrom- oder Wechselstromerregung sein könnte, so wird jedoch für eine konkrete Ausführungsform ein Permanentmagnet vorgeschlagen.

Der Folgermagnet kann in herkömmlicher Weise mit einem Skalenzeiger oder dergleichen versehen werden, um die Vertikallage des Schwebekörpers vor Ort anzuzeigen.

Dabei ist zum Zwecke der Korrektur nichtlinearer Eingangssignale der Prozessor bevorzugt nach Anspruch 2 ausgebildet.

Um das Ausgangssignal am Ort oder an einer entfernten Stelle anzeigen zu können und ggf. noch weitere Daten anzeigen zu können, ist bevorzugt eine Ausbildung nach Anspruch 3, insbesondere Anspruch 4, vorgesehen.

In der Auswerteschaltung ist besonders flexibel ein digitaler Tiefpaß nach Anspruch 5.

Der Kurven-Interpolator ist bevorzugt nach Anspruch 6 ausgebildet (die Bezeichnung "Spline-Interpolator" ist hier so zu verstehen, wie im Buch von Bronstein "Numerische Mathematik", Seite 799, angegeben).

Die Erfindung wird im folgenden an Ausführungsbeispielen unter Hinweis auf die beigefügten Zeichnungen beschrieben.
- Fig. 1: zeigt eine Ausführungsform der Erfindung.
- Fig. 2: zeigt ein Blockschaltbild einer Auswerteschaltung für die Ausführungsform nach Fig. 1.
- Fig. 3: zeigt die Ansicht einer Wiedergabeeinrichtung.

Gleiche Bezugsziffern bezeichnen gleiche oder im wesentlichen gleiche Elemente.

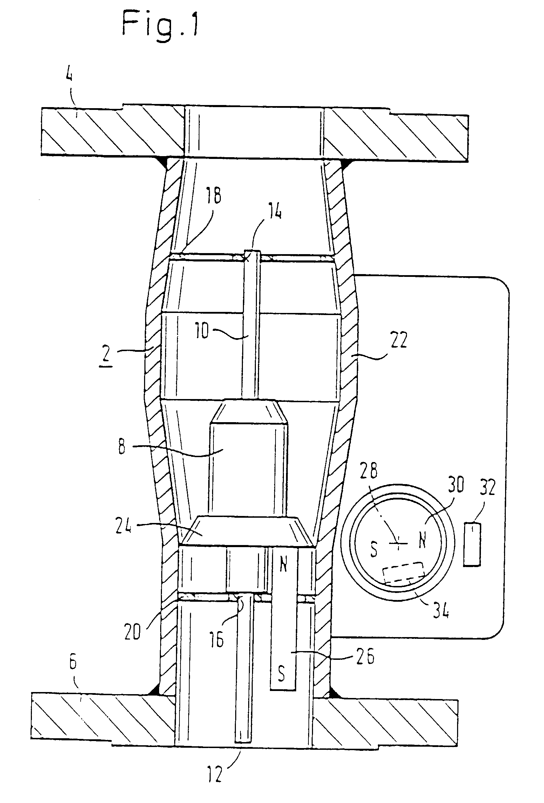

Die Vorrichtung nach Fig. 1 weist ein im wesentlichen vertikal angeordnetes Rohrstück 2 auf, durch das ein Medium von unten nach oDen strömt. An den Enden des Rohrstücks 2 befinden sich Befestigungflansche 4, 6. In dem Rohrstück 2 ist ein Schwebekörper 8 angeordnet, an dem oben und unten Führungsstäbe 10 und 12 befestigt sind, die in Führungsbohrungen 14, 16 in das Rohrstück 2 quer durchsetzenden Querstegen 18, 20 geführt sind. Der Schwebekörper 8 ist in einer Tieflage dargestellt. Oberhalb dieser Tieflage ist das Rohrstück 2 mit einer Erweiterung 22 versehen. Maßgeblich für die Vertikallage des Schwebekörpers 8 ist ein unten an den Schwebekörper 8 angesetzter kegelstumpfförmiger Konus 24, der sich in Strömungsrichtung verjüngt. An die Unterseite dieses kegelszumpfförmigen Konuses 24 ist bei dieser Ausführungsform ein stabförmiger, sich in Strömungsrichtung erstreckender Permanentmagnet angesetzt. Außerhalb des Rohrstücks 2 ist bei dieser Ausführungsform um eine Achse 28 drehbar ein zweiter Permanentmagnet 30 angeordnet, an dem sich ein Zeiger (nicht dargestellt) befinden kann. Außerhalb des drehbaren Permanentmagneten 30 ist ein erstes Hall-Element 32 angeordnet, das von dem Magnetfeld des Permanentmagneten 30 beeinflußt wird. Auf dem Permanentmagneten 30 ist ein zweites Hall-Element 34 angeordnet.

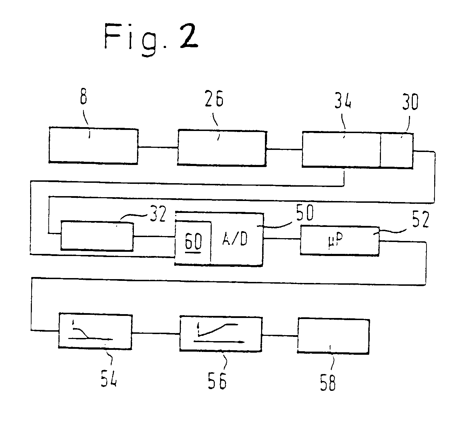

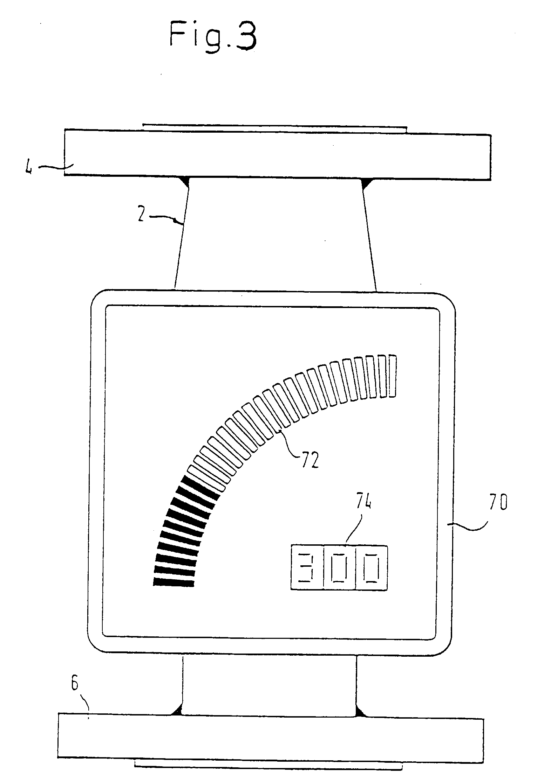

In dem Blockschaltbild nach Fig. 2 ist schematisch angedeutet, wie die Vertikallage des Schwebekörpers 8 die Lage des Permanentmagneten 26 beeinflußt, die Lage des Permanentmagneten 26 die Lage des Permanentmagneten 30 und die Lage des Permanentmagneten 30 das Hall-Element 32 Das von dem ersten Hall-Element 32 abgegebene Signal gelangt über einen A/D-Wandler 50, das Ausgangssignal des A/D-Wandlers 50 zu einem µ/P 52 (digitaler Mikroprozessor), das Ausgangssignal von µ/P 52 gelangt über einen digitalen Tiefpaß 54 und einen Spline-Interpolator 56 zu einer Ausgangschaltung 58 für eine Wiedergabeeinrichtung, wie sie in Fig. 3 dargestellt ist. Der µ/P enthält ein RAM zur Speicherung der von dem A/D-Wandler 50 abgegebenen Signale, ein EEPROM zur Speicherung von Korrekturdaten und ein EPROM zur Korrektur der in dem RAM gespeicherten Signale mittels der in dem EEPROM gespeicherten Korrekturdaten.

Auch von dem zweiten Hall-Element 34 nach Fig. 1 abgegebene Signale werden verarbeitet. Die von diesem Hall-Element 34 abgegebenen Signale sind unabhängig von der Lage des Permanentmagneten 30 und ändern sich normalerweise nur aufgrund einer Alterung des Permanentmagneten 30. Das von dem zweiten Hall-Element 34 abgegebene Signal kann somit als Bezugssignal angesehen werden. Zum Vergleich dieses Bezugssignals mit dem von dem ersten Hall-Element 32 abgegebenen Signal befindet sich im Eingang des A/D-Wandlers 50 ein Multiplexer 60.

Fig. 3 zeigt ein Wiedergabegerät 70 mit einer digitalen Blockanzeige (Bargraph) und einer numerischen Digitalanzeige 74. Das Wiedergabegerät 70 kann auch (nicht dargestellt) eine Anzeige von Einstellparametern aufweisen.

### Anlagen zum Text:

1) Bronstein "Numerische Mathematik", Seite 796 - 799
2) "Taschenbuch 2 Elektrotechnik", Carl Hauser Verlag, 1. Auflage, Seite 542 - 546
3) "Handbuch für Hochfrequenz- und Elektrotechnik", Band II, 13. Auflage, Seite 129 und 130, Seite 228 und 229, Seite 289 - 290.

## Patentansprüche

1. Vorrichtung zur Messung des Stroms eines fließfähigen Mediums, das durch ein im wesentlichen vertikal angeordnetes Rohrstück (2) von unten nach oben fließt, mit einem in dem Rohrstück (2) angeordneten Schwebekörper (8), dessen Vertikallage von der Stärke des Stroms abhängt, einem zur gemeinsamen Bewegung mit dem Schwebekörper (8) verbundenen Gebermagneten (26), einem von der räumlichen Lage des Gebermagneten (26) beeinflußten ersten Hall-Sensor (32) außerhalb des Rohrstücks (2) und einer von dem ersten Hall-Sensor (32) gesteuerten elektronischen Auswerteschaltung (Fig. 2, 3), die ein dem Strom des Mediums entsprechendes Ausgangssignal abgibt, wobei die Auswerteschaltung (Fig. 2, 3) einen an dem ersten Hall-Sensor (32) angeschlossenen Analog-Digital-Wandler (50), einen an dem Analog-Digital-Wandler (50) angeschlossenen digitalen Prozessor (52), ein an dem digitalen Prozessor (52) angeschlossenes digitales Tiefpaßfilter (54), einen an dem digitalen Tiefpaßfilter (54) angeschlossenen Kurven-Interpolator (56) und eine an dem Kurven-Interpolator (56) angeschlossene, das Ausgangssignal abgebende Ausgangsschaltung (58) aufweist,
**gekennzeichnet durch**
einen außerhalb des Rohrstücks (2) relativ zu dem ersten Hall-Sensor (32) um eine Achse (28) drehbar gelagerten und magnetisch mit dem Gebermagneten (26) gekuppelten Folgermagneten (30), dessen Drehstellung von der räumlichen Lage des Gebermagneten (26) abhängt, wobei der erste Hall-Sensor (32) im Magnetfeld des Folgermagneten (30) angeordnet ist, um ein von der Drehstellung des Folgermagneten (30) abhängiges Signal für die Auswerteschaltung bereitzustellen,
wobei ein weiterer Hall-Sensor (34) vorgesehen ist, der mit dem Folgermagneten (30) körperfest verbunden ist, und wobei die Auswerteschaltung dazu eingerichtet ist, das von dem weiteren Hall-Sensor (34) abgegebene Signal als Referenzinformation für die Auswertung des von dem ersten Hall-Sensor (32) abgegebenen Signals zu verarbeiten.

2. Vorrichtung nach Anspruch 1, **dadurch gekennzeichnet,** daß der digitale Prozessor (52) ein RAM zur Speicherung von von dem Hall-Sensor (32) abgegebenen Signalen, ein EEPROM zur Speicherung von Korrekturdaten und ein EPROM zur Korrektur der in dem RAM gespeicherten Signale mittels der in dem EEPROM gespeicherten Korrekturdaten aufweist.

3. Vorrichtung nach Anspruch 1 oder 2, **dadurch gekennzeichnet,** daß an die Ausgangsschaltung (Fig. 2, 3) eine Wiedergabeeinrichtung (70) - vorzugsweise ein LC-Display - zur Durchflußanzeige angeschlossen ist.

4. Vorrichtung nach Anspruch 3, **dadurch gekennzeichnet,** daß die Durchflußanzeige analog durch eine Balkenanzeige (Bargraph) (72) und/oder digital in physikalischen Einheiten oder in Prozent des maximalen Durchflusses (74) erfolgt.

5. Vorrichtung nach Anspruch 1, 2, 3 oder 4, **dadurch gekennzeichnet,** daß das digitale Tiefpaßfilter (54) als digitales Softwarefilter mit programmierbarem Zeitverhalten ausgebildet ist.

6. Vorrichtung nach einem der Ansprüche 1, 2, 3 oder 5, **dadurch gekennzeichnet,** daß der Kurven-Interpolator (56) ein Kurven dritter Ordnung interpolierender Interpolator (Spline-Interpolator) ist.

## Claims

1. Apparatus for measuring the flow of a fluid medium which flows through a substantially vertically arranged tube section (2) from bottom to top, with a float element (8) arranged in the tube section (2), the vertical position of which depends on the strength of the flow, with a sender magnet (26) which is bound to common movement with the float element (8), a first Hall sensor (32) outside the pipe section (2) which is influenced by the spatial position of the sender magnet (26) and electronic evaluation circuitry (Fig. 2, 3) which is controlled by the first Hall sensor (32) which emits an output signal corresponding to the flow of the medium, wherein the evaluation circuitry (Fig. 2, 3) has an analogue/digital converter (50) connected to the first Hall sensor (32), a digital processor (52) connected to the analogue/digital converter (50), a digital low pass filter (54) connected to the digital processor (52), a curve interpolator (56) connected to the digital low pass filter (54) and an output circuit (58), which transmits the output signal, connected to the curve interpolator (56), characterised by a follower magnet (30), mounted rotatably about an axis (28) outside the pipe section (2) relative to the first Hall sensor (32), and magnetically coupled with the sender magnet (26), the rotational setting of which is dependent on the spatial position of the sender magnet (26), wherein the first Hall sensor (32) is arranged in the magnetic field of the follower magnet (30) in order to provide a signal for the evaluation circuitry which is dependent on the rotational setting of the follower magnet (30), wherein a further Hall sensor (34) is provided which is rigidly connected to the follower magnet (30) and wherein the evaluation circuitry is set up to process the signal transmitted by the further Hall sensor (34) as reference information for the evaluation of the signal transmitted by the first Hall sensor (32).

2. Apparatus according to claim 1, characterised in that the digital processor (52) has a RAM for storing signals transmitted by the Hall sensor (32), an EEPROM for storing correction data and an EPROM for correction of signals stored in the RAM via the correction data stored in the EEPROM.

3. Apparatus according to claims 1 or 2, characterised in that a reproduction apparatus (70) - preferably an LC display - is attached to the output circuitry (Fig. 2, 3) to indicate the flow.

4. Apparatus according to claim 3, characterised in that the flow display is provided in analogue manner by a bar display (bar graph) (72) and/or in digital manner in physical units or as a percentage of the maximum flow (74).

5. Apparatus according to claims 1, 2, 3 or 4, characterised in that the digital low pass filter (54) is designed as a digital software filter with programmable time response.

6. Apparatus according to one of claims 1, 2, 3 or 5, characterised in that the curve interpolator (56) is an interpolator which interpolates curves of the third order (spline interpolator).

## Revendications

1. Dispositif de mesure du débit d'un fluide circulant, de bas en haut, par une pièce tubulaire (2) agencée pour l'essentiel verticalement, comprenant un flotteur (8), disposé dans la pièce tubulaire (2) et dont la position verticale dépend de l'intensité du débit ; un aimant (26) devant être déplacé dans l'espace, par le flotteur (8) d'une manière correspondant à sa position verticale ; un premier capteur (32) à effet Hall, influencé par la position de l'aimant (26) dans l'espace ; et un circuit électronique d'interprétation (figures 2, 3) commandé par le premier capteur (32) à effet Hall, et délivrant un signal de sortie correspondant au débit du fluide, le circuit d'interprétation (figures 2, 3) comprenant un convertisseur analogique/ numérique (50) raccordé au premier capteur (32) à effet Hall; un processeur numérique (52) raccordé au convertisseur analogique/numérique (50) ; un filtre passe-bas numérique (54) raccordé au processeur numérique (52) ; un interpolateur (56) de courbes, et délivrant le signal de sortie,
**caractérisé par**
un aimant suiveur (30) accouplé magnétiquement à l'aimant (26) est monté à l'extérieur de la pièce tubulaire (2) de façon rotative par rapport au premier capteur (32) à effet Hall autour d'un axe (28) et dont la position de rotation dépend de la situation dans l'espace de l'aimant (26), le premier capteur (32) à effet Hall étant agencé dans le champ magnétique de l'aimant suiveur (30) pour préparer un signal dépendant de la position de rotation de l'aimant (30) pour le signal dépendant,
un autre capteur (34) à effet Hall étant prévu, capteur relié solidairement à l'aimant suiveur (30) et le circuit d'interprétation étant apte à traiter le signal émis par l'autre capteur (34) à effet Hall (34) comme information de préférence pour l'interprétation du signal émis pour le premier capteur (32) à effet Hall.

2. Dispositif selon la revendication 1, caractérisé par le fait que le processeur numérique (52) comprend une RAM en vue de la mémorisation de signaux délivrés par le capteur (32) à effet Hall, prévu au minimum ; une EEPROM pour mémoriser des données correctrices ; et une EPROM en vue de corriger les signaux météorisés dans la RAM, au moyen des données correctrices mémorisées dans l'EEPROM.

3. Dispositif selon la revendication 1 ou 2, caractérisé par le fait qu'un appareil de restitution (70) - de préférence une représentation visuelle par cristaux liquides - est raccordé au circuit de sortie (figures 2, 3) en vue de l'affichage du débit.

4. Dispositif selon la revendication 3, caractérisé par le fait que l'affichage du débit s'opère analogiquement, au moyen d'un affichage par bâtonnets (bargraphe) (72) et/ou numériquement, en des unités physiques, ou bien en pourcentage du débit maximal (74).

5. Dispositif selon l'une des revendications 1, 2, 3 ou 4, caractérisé par le fait que le filtre passe-bas numérique (54) est réalisé sous la forme d'un filtre numérique de programmerie, dont le comportement temporel est programmable.

6. Dispositif selon l'une des revendications 1, 2, 3 ou 5, caractérisé par le fait que l'interpolateur (56) de courbes est un interpolateur (interpolateur de Spline) interpolant des courbes de troisième ordre.
